# EUROPEAN PATENT APPLICATION

(11) **EP 4 716 351 A1**
(43) Date of publication of application: **25.03.2026**
(21) Application number: 24826171.1
(22) Date of filing: 07.06.2024
(51) Int. Cl.: H04W 74/04, H04W 74/0808, H04W 74/00, H04W 72/541, H04W 24/08, H04W 84/12

(54) **METHOD AND DEVICE FOR COMMUNICATION IN INTERFERENCE SITUATION IN WIRELESS LAN SYSTEM**

(30) Priority: 20.06.2023 KR 20230079085
(71) Applicant: Hyundai Motor Company, Seoul 06797 (KR); Kia Corporation, Seoul 06797 (KR); Korea National University of Transportation Industry-Academic Cooperation Foundation, Chungju-si, Chungcheongbuk-do 27469 (KR)
(72) Inventor: KIM, Yong Ho, Incheon 22003 (KR); MOON, Ju Seong, Osan-si, Gyeonggi-do 18101 (KR)
(74) Representative: Isarpatent
(86) International application number: PCT/KR2024/007821
(87) International publication number: WO 2024/262849

(57) **Abstract**

The present disclosure relates to communication in an interference situation in a wireless local area network (WLAN) system, and a method of operating an access point (AP) includes receiving at least one data frame from a first station (STA), transmitting at least one control frame to at least one STA including the first STA, and performing an operation associated with a transmit opportunity (TXOP) of the first STA. One frame of the at least one data frame may include information on the TXOP of the first STA.

## Description

### Technical Field

The present disclosure relates to a wireless local area network (WLAN) system, and more particularly, to a communication method and apparatus in an interference situation of a WLAN network system.

### Background Art

Recently, as the spread of mobile devices expands, a wireless local area network technology capable of providing fast wireless communication services to mobile devices is in the spotlight. The wireless local area network (LAN) technology may be a technology that supports mobile devices such as smart phones, smart pads, laptop computers, portable multimedia players, embedded devices, and the like to wirelessly access the Internet based on wireless communication technology.

As applications requiring higher throughput and applications requiring real-time transmission occur, an expanded frequency bandwidth and/or an efficient retransmitting operation may be supported in a WLAN. In addition, an operation of simultaneously using multiple links or links may be supported.

Meanwhile, the technologies that are described in the Background section are written to improve the understanding of the background of the present disclosure and may include content that is not already known to those of ordinary skill in the art to which the present disclosure belongs.

### Description of Invention

### Technical Problem

The present disclosure is directed to providing a method and apparatus for performing smooth communication when interference or communication interruption occurs in a WLAN terminal because of non-WLAN or wireless LAN direct communication.

The present disclosure is directed to providing a method and apparatus for mitigating interference when non-WLAN wireless communication or WLAN direct communication is performed in a WLAN system.

Technical objects to be achieved in the present disclosure are not limited to what is mentioned above, and other technical objects not mentioned therein can be considered from the embodiments of the present disclosure to be described below by those skilled in the art to which a technical configuration of the present disclosure is applied.

### Technical Solution

According to an embodiment of the present disclosure, a method of operating an access point (AP) in a wireless local area network (WLAN) system includes receiving at least one data frame from a first station (STA), transmitting at least one control frame to at least one STA including the first STA, and performing an operation associated with a transmit opportunity (TXOP) of the first STA. One frame of the at least one data frame may include information on the TXOP of the first STA.

According to another embodiment of the present disclosure, a method of operating a first station (STA) in a wireless local area network (WLAN) system includes obtaining a transmit opportunity (TXOP), transmitting at least one data frame to an access point (AP), receiving at least one control frame from the AP, and performing an operation exclusive of WLAN communication. One frame of the at least one data frame may include information on the TXOP.

According to yet another embodiment of the present disclosure, a communication node in a wireless local area network (WLAN) system includes a transceiver and a processor coupled to the transceiver. The transceiver receives at least one data frame from a first station (STA), the transceiver transmits at least one control frame to at least one STA including the first STA, and the processor performs an operation associated with a transmit opportunity (TXOP) of the first STA. One frame of the at least one data frame may include information on the TXOP of the first STA.

According to still another embodiment of the present disclosure, a communication node in a wireless local area network (WLAN) system includes a transceiver and a processor coupled to the transceiver. The processor obtains a transmit opportunity (TXOP), the transceiver transmits at least one data frame to an access point (AP), the transceiver receives at least one control frame from the AP, and the processor performs an operation exclusive of WLAN communication. One frame of the at least one data frame may include information on the TXOP.

### Advantageous Effects

According to the present disclosure, it is possible to provide a WLAN terminal or a communication method that enables a TXOP to be shared with another WLAN terminal or terminates the TXOP early to improve the stability of WLAN communication, when the WLAN terminal performing non-WLAN wireless communication or WLAN direct communication does not perform WLAN communication.

Effects obtained in the present disclosure are not limited to the above-mentioned effects, and other effects not mentioned above may be clearly derived and understood by those skilled in the art, to which a technical configuration of the present disclosure is applied, from the following description of embodiments of the present disclosure. That is, effects, which are not intended when implementing a configuration described in the present disclosure, may also be derived by those skilled in the art from the embodiments of the present disclosure.

### Description of Drawings

FIG. 1 illustrates a block diagram of a communication node in a WLAN system.
FIG. 2 illustrates the concept of multiple links set between multi link devices (MLDs) in a WLAN system.
FIG. 3 illustrates a first embodiment of a communication method when interference occurs in a WLAN system.
FIG. 4 illustrates a second embodiment of a communication method when interference occurs in a WLAN system.
FIG. 5A illustrates a third embodiment of a communication method when interference occurs in a WLAN system.
FIG. 5B illustrates a fourth embodiment of a communication method when interference occurs in a WLAN system.
FIG. 5C illustrates a fifth embodiment of a communication method when interference occurs in a WLAN system.
FIG. 6A illustrates a sixth embodiment of a communication method when interference occurs in a WLAN system.
FIG. 6B illustrates a seventh embodiment of a communication method when interference occurs in a WLAN system.
FIG. 6C illustrates an eighth embodiment of a communication method when interference occurs in a WLAN system.
FIG. 7A illustrates a ninth embodiment of a communication method when interference occurs in a WLAN system.
FIG. 7B illustrates a tenth embodiment of a communication method when interference occurs in a WLAN system.
FIG. 8 illustrates an eleventh embodiment of a communication method when interference occurs in a WLAN system.
FIG. 9 illustrates an example of A-control information.
FIG. 10 illustrates an operational flowchart of an AP according to an embodiment of the present disclosure.
FIG. 11 illustrates an operational flowchart of a first STA according to an embodiment of the present disclosure.
FIG. 12 illustrates an operational flowchart of a second STA according to an embodiment of the present disclosure.

### Mode for Invention

Hereinafter, embodiments of the present disclosure will be described in detail with reference to the accompanying drawings such that those skilled in the art may easily implement the embodiments. However, the present disclosure may be embodied in different forms and is not limited to the embodiments described herein.

In describing the present disclosure, a detailed description of known functions and configurations will be omitted when it may obscure the subject matter of the present disclosure. In addition, in the drawings, a portion that is irrelevant to the description of the present disclosure is omitted, and similar reference numerals refer to similar portions.

In the present disclosure, when a component is "connected", "coupled" or "linked" to another component, it may include not only a direct connection relationship but also an indirect connection relationship in which another component exists in therebetween. In addition, when a component "includes" or "has" other components, it means that other components may be further included rather than excluding other components unless the context clearly indicates otherwise.

In the present disclosure, terms such as first, second, etc. are used only for the purpose of distinguishing one component from other components, and, unless otherwise specified, the order or importance of the components is not limited. Accordingly, within the scope of the present disclosure, a first component in one embodiment may be referred to as a second component in another embodiment, and, similarly, a second component in one embodiment is referred to as a first component in another embodiment.

In the present disclosure, components that are distinguished from each other are intended to clearly describe each of their characteristics, and do not necessarily mean that the components are separated from each other. That is, a plurality of components may be integrated to form one hardware or software unit, or one component may be distributed to form a plurality of hardware or software units. Accordingly, even if not specifically mentioned, such integrated or distributed embodiments are also included in the scope of the present disclosure.

In the present disclosure, components described in various embodiments do not necessarily mean essential components, and some thereof may be optional components. Accordingly, an embodiment composed of a subset of components described in one embodiment is also included in the scope of the present disclosure. In addition, embodiments including other components in addition to components described in various embodiments are also included in the scope of the present disclosure.

In the present disclosure, each of such phrases as "A or B," "at least one of A or B," "A, B, or C," "at least one of A, B, and C," "at least one of A, B, or C or combination thereof" may include any one of, or all possible combinations of the items enumerated together in a corresponding one of the phrases.

The advantageous effects and features of the present disclosure and a method of achieving will be clearly understood with reference to embodiments described in detail below with the accompanying drawings. However, the present disclosure is not limited to the embodiments described below but may be implemented in various different forms, and these embodiments are provided to fully disclose the present invention and fully inform those skilled in the art of the scope of the present invention.

Hereinafter, a wireless LAN communication system to which the embodiments of the present invention are applied will be described. A wireless LAN communication system to which the embodiments of the present invention are applied is not limited to the description below, and the embodiments of the present invention may be applied to various wireless LAN communication systems. A wireless LAN communication system may also be referred to as "a wireless LAN communication network."

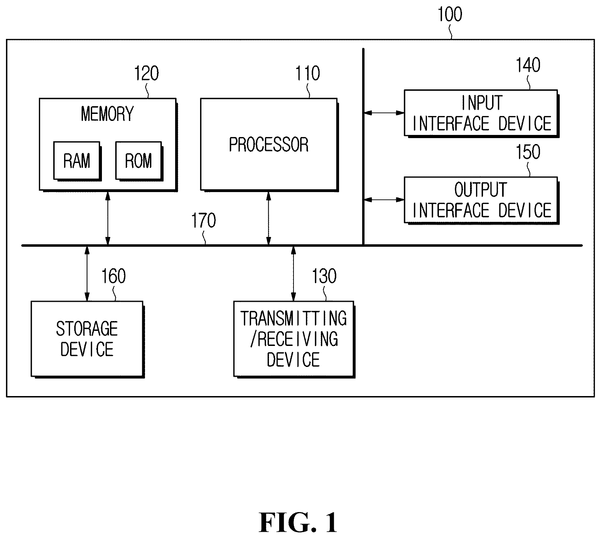

FIG. 1 illustrates a block diagram of a communication node in a WLAN system.

Referring to FIG. 1, a communication node 100 may be an access point (AP), a station (STA), an AP multi-link device (MLD), or a non-AP MLD. A STA may be a non-AP STA. An operating channel width supported by an AP may be 20 MHz, 80 MHz, or 160 MHz. An operating channel width supported by a STA may be 20 MHz or 80 MHz.

The communication node 100 may include at least one processor 110, a memory 120, and at least one transmitting/receiving device 130 that is connected to a network and performs communication. The transmitting/receiving device 130 may also be referred to as a transceiver, a radio frequency (RF) unit, or a RF module. In addition, the communication node 100 may further include an input interface device 140, an output interface device 150, and a storage device 160. Components included in the communication node 100 may be connected by a bus 170 and perform communication between them.

However, each component included in the communication node 100 may be connected not by the common bus 170 but by an individual interface or individual bus around the processor 110. For example, the processor 110 may be connected to at least one of the memory 120, the transmitting/receiving device 130, the input interface device 140, the output interface device 150, and the storage device 160 through a dedicated interface.

The processor 110 may execute a program command stored in at least one of the memory 120 and the storage device 160. The processor 110 may be a central processing unit (CPU), a graphics processing unit (GPU), or a dedicated processor that performs methods according to the embodiments of the present invention. The memory 120 and the storage device 160 may each be formed as at least one of a volatile storage medium and a non-volatile storage medium. For example, the memory 120 may be formed as at least one of a read only memory (ROM) and a random access memory (RAM).

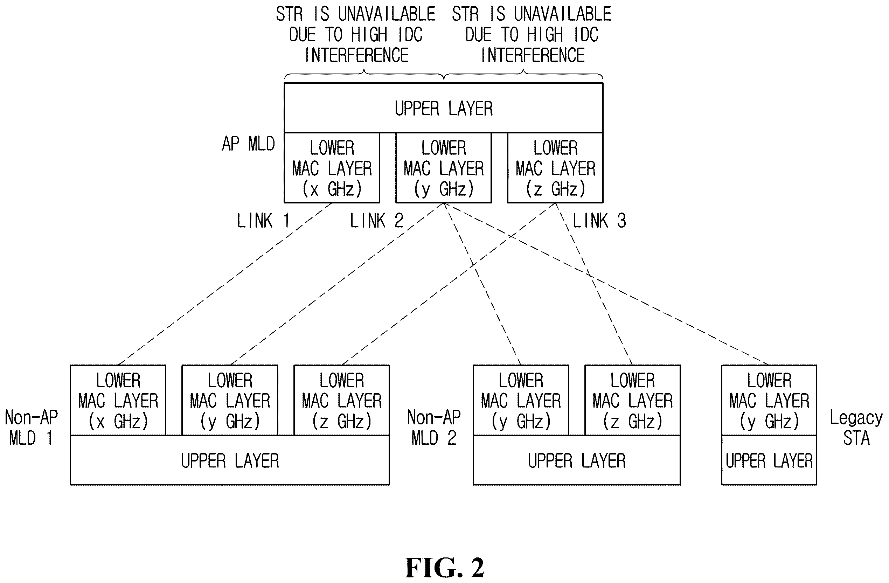

FIG. 2 illustrates the concept of multiple links set between multi link devices (MLDs) in a WLAN system.

Referring to FIG. 2, an MLD may have one medium access control (MAC) address. In embodiments, an MLD may be an AP MLD and/or a non-AP MLD. The MAC address of an MLD may be used in a multi-link setup procedure between a non-AP MLD and an AP MLD. The MAC address of an AP MLD may be different from the MAC address of a non-AP MLD. An Ap(s) associated with an AP MLD may have a different MAC address, and an STA(s) associated with a non-AP MLD may have a different MAC address. APs present in an AP MLD and having different MAC addresses may be in charge of respective links and serve as independent APs.

STAs present in a non- AP MLD and having different MAC addresses may be in charge of respective links and serve as independent STAs. A non-AP MLD may be referred to as a STA MLD. An MLD may support a simultaneous transmit and receive (STR) operation. In this case, the MLD may perform a transmitting operation on Link 1 and a receiving operation on Link 2. An MLD supporting an STR operation may be referred to as an STR MLD (e.g., an STR AP MLD or an STR non-AP MLD). In embodiments, a link may be a channel or a band. A device not supporting an STR operation may be referred to as a non-STR (NSTR) AP MLD or an NSTR non-AP MLD (or NSTR STA MLD).

An MLD may transmit and receive a frame over multiple links using a non-contiguous bandwidth extension scheme (e.g., 80 MHz+80 MHz). A multi-link operation may include multi-band transmission. An AP MLD may include a plurality of APs, and the plurality of APs may operate on different links. A plurality of APs may each perform a function of a lower MAC layer. A plurality of APs may each be referred to as "a communication node" or "a lower entity". A communication node (that is, AP) may operation according to the control of an upper layer (or the processor 110 illustrated in FIG. 1). A non-AP MLD may include a plurality of STAs, and the plurality of STAs may operate on different links. A plurality of STAs may each be referred to as "a communication node" or "a lower entity". A communication node (e.g., STA) may operate according to the control of an upper layer (or the processor 110 illustrated in FIG. 1).

An MLD may perform communication over multiple bands. For example, an MLD may perform communication using a bandwidth of 40 MHz in a band of 2.4 GHz according to a channel expansion scheme (e.g., a bandwidth expansion scheme) and perform communication using a bandwidth of 160 MHz in a band of 5 GHz according to the channel expansion scheme. An MLD may perform communication using the bandwidth of 160 MHz in the band of 5 GHz and perform communication using the bandwidth of 160 MHz in a band of 6 GHz. A single frequency band (e.g., a single channel) used by an MLD may be defined as a single link. Alternatively, a plurality of links may be set in a single frequency band used by an MLD. For example, an MLD may set one link in the band of 2.4 GHz and set two links in the band of 6 GHz. The links may be referred to as a first link, a second link, and a third link respectively. Alternatively, the links may be referred to as Link 1, Link 2, and Link 3 respectively. A link number may be set by an AP, and an identifier (ID) may be assigned to each link.

An MLD (e.g., an AP MLD and/or a non-AP MLD) may set multiple links by performing an access procedure and/or a negotiation procedure for a multi-link operation. In this case, the number of links and/or a link to be used among multiple links may be set. A non-AP MLD (e.g., a STA) may identify information on a band in which communication with an AP MLD is possible. In a negotiation procedure for a multi-link operation between a non-AP MLD and an AP MLD, the non-AP MLD may set one or more links among links supported by the AP MLD to be used for the multi-link operation. A STA (e.g., a STA according to IEEE 802.11a/b/g/n/ac/ax) not supporting the multi-link operation may access one or more links among multiple links supported by an AP MLD.

When a band gap between multiple links (e.g., a band gap between Link 1 and Link 2 in the frequency domain) is sufficient, an MLD may perform an STR operation. For example, the MLD may transmit physical layer convergence procedure (PLCP) protocol data (PPDU) 1 using Link 1 among the multiple links and receive PPDU 2 using Link 2 among the multiple links. On the other hand, when a band gap between multiple links is not sufficient and an MLD performs an STR operation, in-device coexistence (IDC) interference, that is, interference between multiple links may occur. Accordingly, when a band gap between multiple links is not sufficient, an MLD may not perform an STR operation. A pair of links in the above-described interference relationship may be a pair of links limited to non simultaneous transmit and receive (NSTR). Here, an MLD may be an NSTR AP MLD or an NSTR non-AP MLD.

For example, multiple links including Link 1, Link 2, and Link 3 may be set between an AP MLD and a non-AP MLD 1. When a band gap between Link 1 and Link 3 is sufficient, the AP MLD may perform an STR operation using Link 1 and Link 3. That is, the AP MLD may transmit a frame using Link 1 and receive a frame using Link 3. When a band gap between Link 1 and Link 2 is not sufficient, the AP MLD may not perform the STR operation using Link 1 and Link 2. When a band gap between Link 2 and Link 3 is not sufficient, the AP MLD may not perform the STR operation using Link 2 and Link 3.

Meanwhile, in a WLAN system, a negotiation procedure for a multi-link operation may be performed in an access procedure between an STA and an AP.

A device supporting multiple links (e.g., an AP or an STA) may be referred to as a multi-link device (MLD). An AP supporting multiple links may be referred to as an AP MLD, and an STA supporting multiple links may be referred to as a non-AP MLD or an STA MLD. An AP MLD may have a physical address (e.g., an MAC address) for each link. An AP MLD may be implemented as if an AP in charge of each link exists separately. A plurality of APs may be managed in a single AP MLD. Accordingly, coordination may be possible among a plurality of APs that belong to the same AP MLD. An STA MLD may have a physical address (e.g., an MAC address) for each link. An STA MLD may be implemented as if an STA in charge of each link exists separately. A plurality of STAs may be managed in a single STA MLD. Accordingly, coordination may be possible among a plurality of STAs that belong to the same STA MLD.

For example, AP1 of an AP MLD and STA1 of an STA MLD may each be in charge of a first link and perform communication using the first link. AP2 of the AP MLD and STA2 of the STA MLD may each be in charge of a second link and perform communication using the second link. STA2 may receive state change information for the first link on the second link. In this case, the STA MLD may collect information (e.g., state change information) received from each link and control an operation performed by STA1 based on the collected information.

Next, methods for transmitting and receiving data in a wireless LAN system will be described. When a method (e.g., transmission or reception of a signal) performed at a first communication node among communication nodes is described, a second communication node corresponding to it may perform a method (e.g., reception or transmission of a signal) corresponding to the method performed at the first communication node. That is, when an operation of an STA is described, an AP corresponding to it may perform an operation corresponding to the operation of the STA. On the other hand, when an operation of an AP is described, an STA corresponding to it may perform an operation corresponding to the operation of the AP. In an embodiment, an operation of an STA may be interpreted as an operation of an STA MLD, an operation of an STA MLD may be interpreted as an operation of an STA, an operation of an AP may be interpreted as an operation of an AP MLD, and an operation of an AP MLD may be interpreted as an operation of an AP.

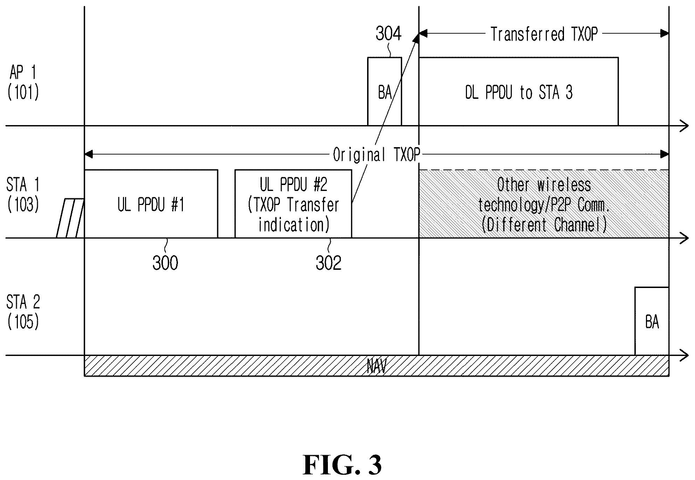

FIG. 3 illustrates a first embodiment of a communication method when interference occurs in a WLAN system.

Referring to FIG. 3, AP1 101, STA1 103, and STA2 105 may operate in a WLAN channel. A WLAN channel may also be referred to as a WLAN link. A WLAN link on which AP1 101, STA1 103, and STA2 105 operate may be one link among multiple links. That is, at least one terminal among AP1 101, STA1 103, and STA2 105 may operate in affiliation with an upper MLD. Alternatively, at least one terminal among AP1 101, STA1 103, and STA2 105 may not operate in affiliation with an upper MLD.

STA1 103 may perform a channel access procedure on a link. The channel access procedure may be an enhanced distributed channel access (EDCA) backoff operation according to each access category (AC). When STA1 103 succeeds in the backoff operation (e.g., an EDCA backoff counter according to each AC reaches 0) and a per-AC EDCA function(EDCAF) of STA1 103 determines transmission, STA1 103 determines that a TXOP is obtained. That is, STA1 103 is a TXOP holder. STA1 103 that is a TXOP holder may obtain a TXOP as long as an original TXOP. STA1 103 may transmit a plurality of data frames at a predetermined interval within the TXOP. The predetermined interval may be a shorter inter-frame space (SIFS) or an XIFS that is longer or shorter than the SIFS. The XIFS may be shorter than or equal to a priority inter-frame space (PIFS). A data frame may be, for example, a physical layer protocol data unit (PPDU), a medium access control layer protocol data unit (MPDU), or an aggregated MPDU (A-MPDU). STA1 103 may transmit a first data frame 300 and a second data frame 302 to AP1 101 on a link. A transmission interval between the first data frame 300 and the second data frame 302 may be an SIFS or an XIFS. In another method, a first control frame 304 of AP1 101 may be transmitted between the first data frame 300 and the second data frame 302. A control frame may be, for example, any one of a block ACK (BA) frame, a contention free end (CF-End) frame, a clear-to-send (CTS) frame, and a request-to-send (RTS) frame. Whether the first control frame 304 is to be transmitted or the first control frame 304 is to be transmitted following the transmission of a last data frame (e.g., the second data frame 302) among data frames may be determined beforehand through negotiation. On the other hand, a transmission time point of the first control frame 304 may be indicated by an indicator included in an MAC header included in a data frame that is transmitted first (e.g., the first data frame 300).

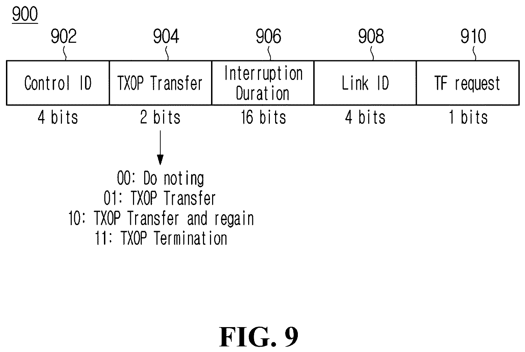

Before the second data frame 302 is transmitted, STA1 103 may know that non-802.11 wireless communication (e.g., Bluetooth communication or cellular communication) will be performed or WLAN direct communication will be performed. Non-802.11 wireless communication or WLAN direct communication may be performed at a different operating frequency from a link on which the first data frame 300 is transmitted. That is, non-802.11 wireless communication or WLAN direct communication may be performed in a channel different from a channel in which a TXOP obtained by STA1 103 is set. When performing non-802.11 wireless communication or WLAN direct communication, STA1 103 may not communicate with AP1 101. Accordingly, STA1 103 may allow AP1 101 to use a communication resource when performing non-802.11 wireless communication or WLAN direct communication. Accordingly, STA1 103 may include TXOP transfer information in an MAC header of an MPDU or A-MPDU included in the second data frame 302. The TXOP transfer information may have, for example, the same structure as illustrated in FIG. 9 or a similar structure. The TXOP transfer information may be included in the form of A-control in an HT control field of the MAC header. In another method, the TXOP transfer information may be transmitted in any other form (e.g., an information element, a bit, a field, or a sub-field) than the A-control form, while being included in a data frame. The TXOP transfer information may indicate that STA1 103 transfers a TXOP to AP1 101. STA1 103 may mark the length of the transferred TXOP in the TXOP transfer information. In another method, STA1 103 may indicate the length of the transferred TXOP as a duration field of the MAC header and indicate a time duration in which WLAN communication is impossible by including the time duration in the TXOP transfer information. Alternatively, the duration field of the MAC header transmitted by STA1 103 and the length of TXOP of STA1 103 included in the TXOP transfer information may be the same. The second data frame 302 that STA1 103 transmits as the last frame for transferring a TXOP may be transmitted in a format (e.g., non-HT PPDU) recognizable to legacy terminals.

After receiving the second data frame 302 of STA1 103, AP1 101 may respond by the first control frame 304. The first control frame 304 may include every reception state information for data frames received until the first control frame 304 is transmitted. After AP1 101 responds by the first control frame 304, AP1 101 may perform communication within a time duration included in TXOP transfer information indicated by STA1 103. The time duration indicated by STA1 103 may be referred to as a transferred TXOP. AP1 101 does not transmit a frame to STA1 103 within the transferred TXOP. AP1 101 may operate as the holder of the transferred TXOP or perform a similar operation to the TXOP holder. AP1 101 may transmit a downlink frame to STA2 105. In another method, AP1 101 may transmit a trigger frame to trigger uplink frame transmission. In another method, AP1 101 may terminate a TXOP. TXOP termination may be performed, for example, through transmission of a second control frame (e.g., a CF-End frame). In another method, the termination of a TXOP may also be performed through transmission of a data frame in which the duration field of the MAC header is indicated as 0.

STA1 103 may perform a non-802.11 wireless communication or WLAN direct communication operation in a time period indicated by the second data frame 302.

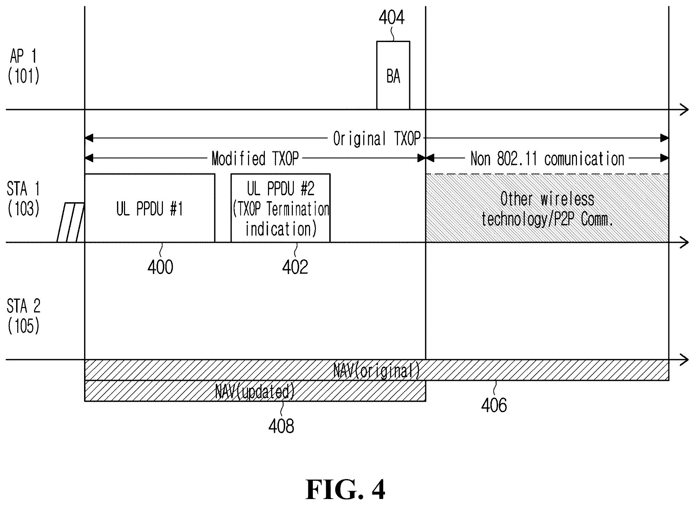

FIG. 4 is a view illustrating a second embodiment of a communication method when interference occurs in a WLAN system.

Referring to FIG. 4, AP1 101, STA1 103, and STA2 105 may operate in a WLAN channel. A WLAN channel may also be referred to as a WLAN link. A WLAN link on which AP1 101, STA1 103, and STA2 105 operate may be one link among multiple links. That is, at least one terminal among AP1 101, STA1 103, and STA2 105 may not operate in affiliation with an upper MLD. Alternatively, at least one of AP1 101, STA1 103, and STA2 105 may not operate in affiliation with an upper MLD.

STA1 103 may perform a channel access procedure on a link. The channel access procedure may be a per-AC EDCA backoff operation. When STA1 103 succeeds in the backoff operation (e.g., an EDCA backoff counter according to each AC reaches 0) and a per-AC EDCA function of STA1 103 determines transmission, STA1 103 determines that a TXOP is obtained. That is, STA1 103 is a TXOP holder. STA1 103 that is a TXOP holder may obtain a TXOP as long as an original TXOP. STA1 103 may transmit a plurality of data frames at a predetermined interval within the TXOP. The predetermined interval may be an SIFS or an XIFS that is longer or shorter than the SIFS. The XIFS may be shorter than or equal to a PIFS. A data frame may be, for example, a PDDU, an MPDU, or an A-MPDU. STA1 103 may transmit a first data frame 400 and a second data frame 402 to AP1 101 on a link. A transmission interval between the first data frame 400 and the second data frame 402 may be an SIFS or an XIFS. In another method, a first control frame 404 of AP1 101 may be transmitted between the first data frame 400 and the second data frame 402. Whether the first control frame 404 is to be transmitted or the first control frame 404 is to be transmitted following the transmission of a last data frame (e.g., the second data frame 402) among data frames may be determined beforehand through negotiation. On the other hand, a transmission time point of a first control frame 404 may be indicated by an indicator included in an MAC header included in a data frame that is transmitted first (e.g., the first data frame 400).

Before the second data frame 402 is transmitted, STA1 103 may know that non-802.11 wireless communication (e.g., Bluetooth communication or cellular communication) will be performed or WLAN direct communication will be performed. Non-802.11 wireless communication or WLAN direct communication may be performed at a different operating frequency from a link on which the first data frame 400 is transmitted. That is, non-802.11 wireless communication or WLAN direct communication may be performed in a channel different from a channel in which a TXOP obtained by STA1 103 is set. When performing non-802.11 wireless communication or WLAN direct communication, STA1 103 may not communicate with AP1 101. Accordingly, STA1 103 may allow communication nodes including AP1 101 and STA2 105 to use a communication resource when performing non-802.11 wireless communication or WLAN direct communication. Accordingly, STA1 103 may include TXOP termination information in an MAC header of an MPDU or A-MPDU included in the second data frame 402. The TXOP termination information may have, for example, the same structure as illustrated in FIG. 9 or a similar structure. As another example, the TXOP termination information may be included in an HT control field of the MAC header in the A-control form. In another method, the TXOP termination information may be transmitted in any other form (e.g., an information element, a bit, a field, or a sub-field) than the A-control form while being included in a frame. The TXOP termination information is information indicating that STA1 103 terminates a TXOP. STA1 103 may indicate an expected transmission time of a BA frame 404 of AP1 101 in a duration field of the MAC header, and STA1 103 may include and indicate a time duration in which WLAN communication is impossible in TXOP transfer information. In another method, STA1 103 may indicate the remaining length of an original TXOP in the duration field of the MAC header, and STA1 103 may indicate a time duration in which WLAN communication is impossible by including the time duration in the TXOP transfer information. The second data frame 402 that STA1 103 transmits as the last frame for terminating a TXOP may be transmitted in a format (e.g., non-HT PPDU) recognizable to legacy terminals.

After receiving the second data frame 402 of STA1 103, AP1 101 may respond by the first control frame 404. The first control frame 404 may include every reception state information for data frames received until the first control frame 404 is transmitted. The duration field included in the MAC header of the first control frame 404 may be set to 0. After AP1 101 responds by the first control frame 404, AP1 101 does not transmit a frame to STA1 103 for a time duration included in the TXOP termination information indicated by STA1 103.

STA2 105 may set a network allocation vector 406 according to a value of the duration field included in the MAC header of an MPDU or/and A-MPDU included in the first data frame 400 of STA1 103. When the NAV 406 is set, a channel is considered busy by virtual carrier sensing. When the channel is considered busy by virtual carrier sensing, a communication node considers the channel occupied when performing a channel sensing operation. STA2 105 may update the NAV 406 according to the duration fields included in the MAC headers of the second data frame 402 transmitted by STA1 103 and the first control frame 404 transmitted by AP1 101. An updated NAV 408 may become shorter than the NAV 406 set by the first data frame 400, and STA2 105 may access a channel based on the NAV 408 that is updated by the second data frame 402. On the other hand, the first control frame 404 may be a CF-End frame. Communication nodes (e.g., communication nodes including STA2 105) receiving the CF-End frame may terminate the NAV. That is, the NAV may be updated to be terminated, and STA2 105 may access a channel based on the NAV 408 that is updated by the first control frame 404.

STA1 103 may perform a non-802.11 wireless communication or WLAN direct communication operation in a time period indicated by the second data frame 402. When STA1 103 terminates a TXOP early and STA1 103 performs a non-802.11 communication or WLAN direct communication operation on a link other than a WLAN link (e.g., a link on which the first data frame 400 and the second data frame 402 are transmitted), STA2 105 may terminate the NAV 406 on the WLAN link. Accordingly, the unnecessary channel access delay of other STAs than STA1 103 may be reduced.

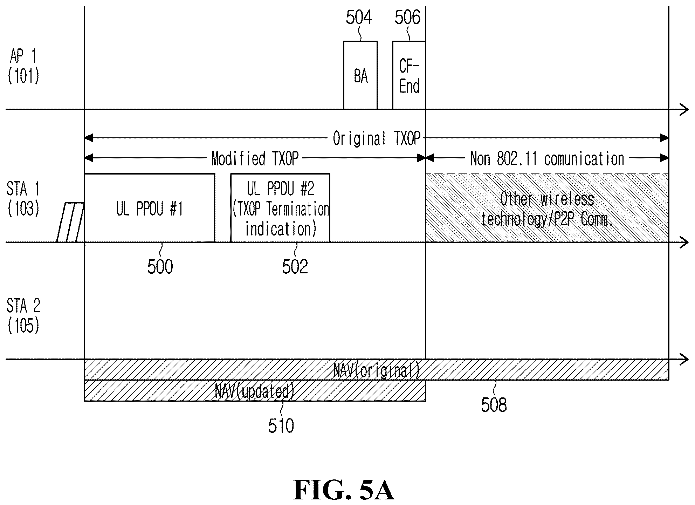

FIG. 5A illustrates a third embodiment of a communication method when interference occurs in a WLAN system.

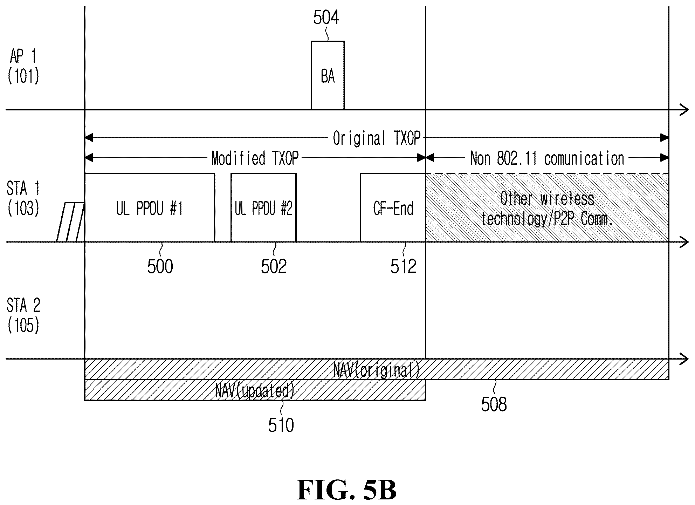

FIG. 5B illustrates a fourth embodiment of a communication method when interference occurs in a WLAN system.

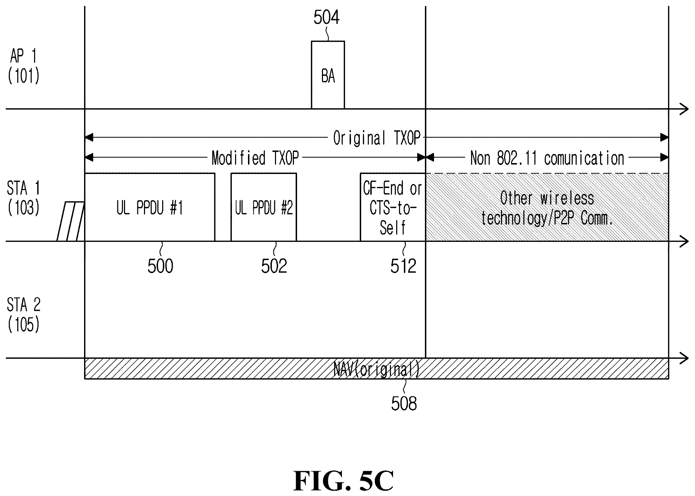

FIG. 5C illustrates a fifth embodiment of a communication method when interference occurs in a WLAN system.

Referring to FIG. 5A, 5B and 5C, AP1 101, STA1 103, and STA2 105 may operate in a WLAN channel. A WLAN channel may also be referred to as a WLAN link. A WLAN link on which AP1 101, STA1 103, and STA2 105 operate may be one link among multiple links. That is, at least one terminal among AP1 101, STA1 103, and STA2 105 may not operate in affiliation with an upper MLD. Alternatively, at least one of AP1 101, STA1 103, and STA2 105 may not operate in affiliation with an upper MLD.

STA1 103 may perform a channel access procedure on a link. The channel access procedure may be a per-AC EDCA backoff operation. When STA1 103 succeeds in the backoff operation (e.g., an EDCA backoff counter according to each AC reaches 0) and a per-AC EDCA function of STA1 103 determines transmission, STA1 103 determines that a TXOP is obtained. That is, STA1 103 is a TXOP holder. STA1 103 that is a TXOP holder may obtain a TXOP as long as an original TXOP. STA1 103 may transmit a plurality of data frames at a predetermined interval within the TXOP. The predetermined interval may be an SIFS or an XIFS that is longer or shorter than the SIFS. The XIFS may be shorter than or equal to a PIFS. A data frame may be a PDDU, an MPDU, or an A-MPDU. STA1 103 may transmit a first data frame 500 and a second data frame 502 to AP1 101 on a link. A transmission interval between the first data frame 500 and the second data frame 502 may be an SIFS or an XIFS.

In another method, a first control frame 504 of AP1 101 may be transmitted between the first data frame 500 and the second data frame 502. For example, a control frame may be any one of a BA frame, a CF-End frame, a CTS frame, and a RTS frame. Whether the first control frame 504 is to be transmitted or the first control frame 504 is to be transmitted following the transmission of a last data frame (e.g., the second data frame502) among data frames may be determined beforehand through negotiation, or an indicator may be included in an MAC header included in a data frame that is transmitted first (e.g., the first data frame 500).

Before the second data frame 502 is transmitted, STA1 103 may know that non-802.11 wireless communication (e.g., Bluetooth communication or cellular communication) will be performed or WLAN direct communication will be performed.

Referring to FIG. 5A, STA1 103 may include TXOP termination information in an MAC header of an MPDU or A-MPDU included in the second data frame 502. The TXOP termination information may have, for example, the same structure as illustrated in FIG. 9 or a similar structure. The TXOP termination information may be included in an HT control field of the MAC header in the A-control form. In another method, the TXOP termination information may be transmitted in any other form (e.g., an information element, a bit, a field, or a sub-field) than the A-control form while being included in a frame. The TXOP termination information is information indicating that STA1 103 terminates a TXOP. STA1 103 may indicate an expected transmission time of the first control frame 504 of AP1 101 in a duration field of the MAC header. In addition, STA1 103 may include and indicate a time duration in which WLAN communication is impossible in TXOP transfer information. In another method, STA1 103 may indicate a transmission time of the first control frame 504 and the second control frame 506 of AP1 101 in the duration field of the MAC header. In addition, STA1 103 may include and indicate a time duration in which WLAN communication is impossible in TXOP transfer information. In another method, STA1 103 may indicate the remaining length of an original TXOP in the duration field of the MAC header. In addition, STA1 103 may include and indicate a time duration in which WLAN communication is impossible in TXOP transfer information.

The second data frame 502 that STA1 103 transmits as the last frame for terminating a TXOP may be transmitted in a format (e.g., non-HT PPDU) recognizable to legacy terminals.

After receiving the second data frame 502 of STA1 103, AP1 101 may respond using the first control frame 504. The first control frame 504 may include every reception state information for data frames received until the first control frame 504 is transmitted. The duration field included in the MAC header of the first control frame 504 may be set to 0. After AP1 101 responds using the first control frame 504, AP1 101 does not transmit a frame to STA1 103 for a time duration included in the TXOP termination information indicated by STA1 103. After transmitting the first control frame 504, AP1 101 may transmit the second control frame 506. STAs receiving the second control frame 506 may initialize a NAV 508, and a TXOP is terminated. The second control frame 506 may be a CF-End frame. In another method, the second control frame 506 may be a separate frame that is not a CF-End frame and indicates initialization or reduction of an NAV.

STA2 105 may set the NAV 508 according to a value of the duration field included in the MAC header of an MPDU or/and A-MPDU included in the first data frame 500 of STA1 103. When the NAV 508 is set, a channel is considered busy by virtual carrier sensing. STA2 105 may update the NAV 508 according to the duration fields included in the MAC headers of the second data frame 502 transmitted by STA1 103 and the first control frame 504 transmitted by AP1 101. An updated NAV 510 may become shorter than the NAV 508 set by the first data frame 500, and STA2 105 may access a channel based on the updated NAV 510.

STA1 103 may perform a non-802.11 wireless communication or WLAN direct communication operation in a time period indicated by the second data frame 502.

Referring to FIG. 5B, STA1 103 may include and indicate an expected transmission time of the first control frame 504 of AP1 101 and a transmission time of the second control frame 512 in a duration field of an MAC header of an MPDU or A-MPDU included in the second data frame 502. AP1 101 may respond to the second data frame 502 of STA1 103 by using the first control frame 504, and STA1 103 may transmit the second control frame 512 to indicate TXOP termination after receiving the first control frame 504 of AP1 101.

STA2 105 may set the NAV 508 according to a value of the duration field included in the MAC header of an MPDU and/or A-MPDU included in the first data frame 500 of STA1 103. When the NAV 508 is set, the channel is considered busy by virtual carrier sensing. When the channel is considered busy by virtual carrier sensing, a communication node considers the channel occupied when performing a channel sensing operation. STA2 105 may update the NAV 508 according to the duration fields included in the MAC headers of the second data frame 502 transmitted by STA1 103 and the BA frame 504 transmitted by AP1 101. When receiving the second control frame 512 of STA1 103, STA2 105 may update the NAV 508, and the NAV 508 may be initialized. The second control frame 506 may be a CF-End frame. In another method, the second control frame 506 may be a separate frame that is not a CF-End frame and indicates initialization or reduction of an NAV. An updated NAV 510 may become shorter than the NAV 508 set by the first data frame 500, and STA2 105 may access a channel based on the updated NAV 510.

Referring to FIG. 5C, STA1 103 may transmit the second data frame 502 to AP1 101, and AP1 101 may respond to the second data frame 502 of STA1 103 by using the first control frame 504. After receiving the first control frame 504 of AP1 101, STA1 103 may transmit a third control frame 514. The third control frame 514 may be a frame whose receiver address (RA) is STA1 103. The third control frame 103 may be a CTS frame. A duration field of an MAC header of the third control frame 514 may be set to a time duration for protecting the non-802.11 communication or WLAN direct communication of STA1 103. For example, the duration field of the MAC header of the third control frame 514 may be set to a remaining length of an original TXOP that STA1 103 initially obtains.

STA2 105 may set the NAV 508 according to a value of the duration field included in the MAC header of an MPDU or/and A-MPDU included in the first data frame 500 of STA1 103. When the NAV 508 is set, the channel is considered busy by virtual carrier sensing. When the channel is considered busy by virtual carrier sensing, a communication node considers the channel occupied when performing a channel sensing operation. STA2 105 may update the NAV 508 according to the duration fields included in the MAC headers of the second data frame 502 transmitted by STA1 103, the first control frame 504 transmitted by AP1 101, and the third control frame 514 of STA1 103. STA1 103 may access a channel based on the updated NAV 510.

When STA1 103 terminates a TXOP early and STA1 103 performs a non-802.11 communication or WLAN direct communication operation on a link other than a WLAN link (e.g., a link on which the first data frame 500 and the second data frame 502 are transmitted), STAs (e.g., STA2 105) other than STA1 103 may terminate the NAV 508 on the WLAN link. Accordingly, the unnecessary channel access delay of other STAs (e.g., STA2 105) than STA1 103 may be reduced. A WLAN link may be a wireless frequency. Another WLAN link may be a different wireless frequency from the above-described wireless frequency.

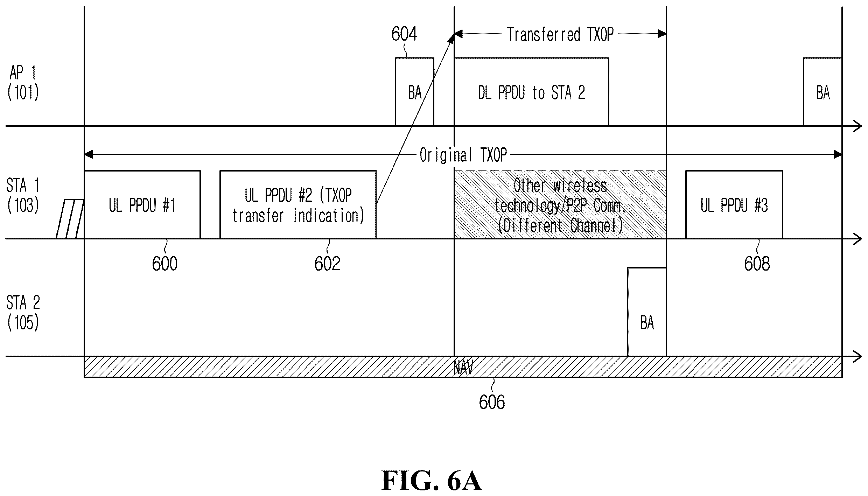

FIG. 6A illustrates a sixth embodiment of a communication method when interference occurs in a WLAN system.

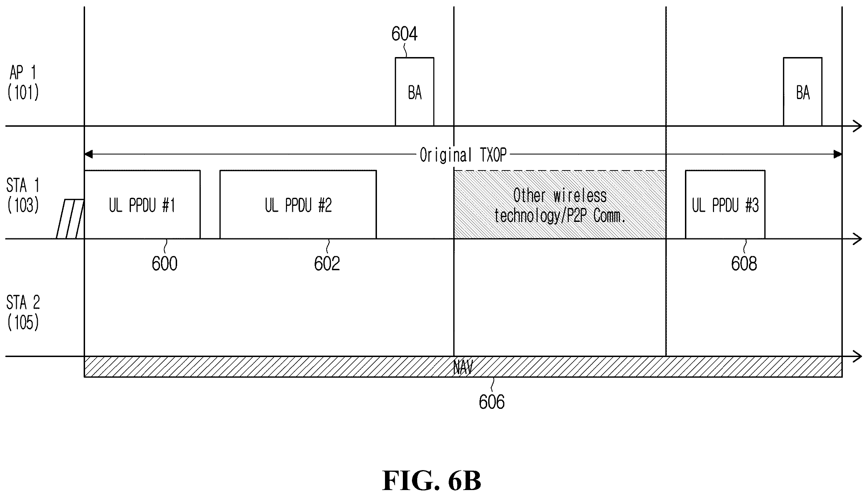

FIG. 6B illustrates a seventh embodiment of a communication method when interference occurs in a WLAN system.

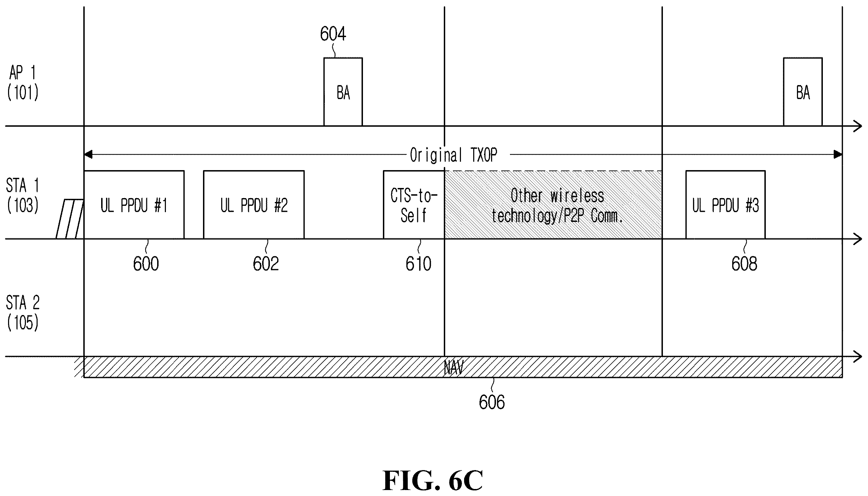

FIG. 6C illustrates an eighth embodiment of a communication method when interference occurs in a WLAN system.

Referring to FIG. 6A, 6B and 6C, AP1 101, STA1 103, and STA2 105 may operate in a WLAN channel. A WLAN channel may also be referred to as a WLAN link. A WLAN link on which AP1 101, STA1 103, and STA2 105 operate may be one link among multiple links. That is, at least one terminal among AP1 101, STA1 103, and STA2 105 may not operate in affiliation with an upper MLD. Alternatively, at least one terminal among AP1 101, STA1 103, and STA2 105 may not operate in affiliation with an upper MLD.

STA1 103 may perform a channel access procedure on a link. The channel access procedure may be a per-AC EDCA backoff operation. When STA1 103 succeeds in the backoff operation (e.g., an EDCA backoff counter according to each AC reaches 0) and a per-AC EDCAF of STA1 103 determines transmission, STA1 103 determines that a TXOP is obtained. That is, STA1 103 is a TXOP holder. STA1 103 that is a TXOP holder may obtain a TXOP as long as an original TXOP. STA1 103 may transmit a plurality of data frames at a predetermined interval within the TXOP. The predetermined interval may be an SIFS or an XIFS. The length of the XIFS may be shorter than or equal to that of a PIFS. A data frame may be a PDDU, an MPDU, or an A-MPDU. STA1 103 may transmit a first data frame 600 and a second data frame 602 to AP1 101 on a link. A transmission interval between the first data frame 600 and the second data frame 602 may be an SIFS or an XIFS. In another method, a first control frame of AP1 101 may be transmitted between the first data frame 600 and the second data frame 602. Whether the first control frame 604 is to be transmitted or the first control frame 604 is to be transmitted following the transmission of a last data frame (e.g., the second data frame 602) among data frames may be determined beforehand through negotiation, or an indicator may be included in an MAC header included in a data frame that is transmitted first (e.g., the first data frame 600).

Before the second data frame 602 is transmitted, STA1 103 may know that non-802.11 wireless communication (e.g., Bluetooth communication or cellular communication) will be performed or WLAN direct communication will be performed.

Referring to FIG. 5A, STA1 103 may include TXOP transfer information in an MAC header of an MPDU or A-MPDU included in the second data frame 602. The TXOP transfer information may have, for example, the same structure as illustrated in FIG. 9 or a similar structure. The TXOP transfer information may be included in an HT control field of the MAC header in the A-control form. In another method, the TXOP transfer information may be transmitted in any other form (e.g., an information element, a bit, a field, or a sub-field) than the A-control form while being included in a frame. The TXOP transfer information may indicate that STA1 103 temporarily transfers a TXOP to AP1 101. STA1 103 may mark the length of the transferred TXOP in the TXOP transfer information. STA1 103 may set the length of the duration field of the MAC header to the remaining length of an original TXOP. The second data frame 602 that STA1 103 transmits as the last frame for transferring a TXOP may be transmitted in a format (e.g., non-HT PPDU) recognizable to legacy terminals.

After receiving the second data frame 602 of STA1 103, AP1 101 may respond by the first control frame 604. The first control frame 604 may include every reception state information for data frames received until the first control frame 604 is transmitted. After AP1 101 responds by the first control frame 604, AP1 101 may perform communication within a time duration included in TXOP transfer information indicated by STA1 103. The time duration indicated by STA1 103 may be referred to as a transferred TXOP. AP1 101 does not transmit a frame to STA1 103 within the transferred TXOP. AP1 101 may operate as the holder of the transferred TXOP or perform a similar operation to the TXOP holder. AP1 101 may transmit a downlink frame to STA2 105. In another method, AP1 101 may transmit a trigger frame to trigger uplink frame transmission. When AP1 101 has no frame to transmit, AP1 101 may not transmit any frame within the transferred TXOP. When the NAV 606 is correctly set in STAs other than STA1 103 by the second data frame 602, frame transmission by the STAs other than STA1 103 may not be performed within the transferred TXOP. On the other hand, when AP1 101 has no frame to transmit, AP1 101 may transmit a frame without information. For example, a data frame without data may be transmitted until a termination time point of the transferred TXOP.

STA1 103 may perform a non-802.11 wireless communication or WLAN direct communication operation in a time period (that is, the transferred TXOP) indicated by the second data frame 602. STA1 103 may transmit the third data frame 608 to AP1 101 on a link after the time period indicated by the second data frame 602. After the indicated time period, STA1 103 may transmit the third data frame 608 immediately after the time period indicated by the second data frame 602 or in a predetermined frame space (e.g., an SIFS). In another method, after the time indicated by the second data frame 602, the STA1 103 may perform a channel access procedure (e.g., an EDCA backoff operation) to transmit the third data frame 608. When the channel access procedure is successful, STA1 103 may transmit the third data frame 608.

Referring to FIG. 6B, the second data frame 602 that STA1 103 transmits may be transmitted in a format (e.g., non-HT PPDU) recognizable to legacy terminals. A duration field of an MPDU or A-MPDU included in the second data frame 602 may indicate the remaining length of an original TXOP.

AP1 101 may respond to the second data frame 602 of STA1 103 by using the first control frame 604. After receiving the first control frame 604 of AP1 101, STA1 103 may perform a non-802.11 wireless communication or WLAN direct communication operation. When the NAV 606 is correctly set in STAs other than STA1 103 by the second data frame 602, while STA1 103 is performing the non-802.11 wireless communication or WLAN direct communication operation, frame transmission by the STAs other than STA1 103 may not be performed.

STA1 103 may transmit the third data frame 608 to AP1 101 on a WLAN link after the non-802.11 wireless communication or WLAN direct communication is terminated. The third data frame 608 may be transmitted immediately after a time indicated by the second data frame 602 or in a predetermined frame space (e.g., an SIFS). In another method, after the time indicated by the second data frame 602, the STA1 103 may perform a channel access procedure (e.g., an EDCA backoff operation) to transmit the third data frame 608. When the channel access procedure is successful, STA1 103 may transmit the third data frame 608.

Referring to FIG. 6C, the second data frame 602 transmitted by STA1 103 may be transmitted in a format (e.g., non-HT PPDU) recognizable to legacy terminals. A duration field of an MPDU or A-MPDU included in the second data frame 602 may indicate the remaining length of an original TXOP.

AP1 101 may respond to the second data frame 602 of STA1 103 by using the first control frame 604. After receiving the first control frame 604 of AP1 101, STA1 103 may transmit a third control frame 610. The non-802.11 transmission and WLAN direct communication of STA1 103 may be performed on a WLAN link (e.g., the first data frame 600 and the second data frame 602). That is, non-802.11 wireless communication or WLAN direct communication may be performed in the same channel as a channel in which a TXOP obtained by STA1 103 is set. Accordingly, the non-802.11 wireless communication or WLAN direct communication of STA1 103 needs to be protected, and when a communication node other than STA1 103 transmits, the wireless communication or WLAN direct communication of STA1 may be interfered. The third control frame 610 may be transmitted to protect the non-802.11 transmission and WLAN direct communication of STA1 103. The third control frame 610 transmitted by STA1 103 may be a control frame whose receiver address is STA1 103. As an example of the third control frame 610, the third control frame 610 may be a CTS frame. The duration field included in the MAC header of the third control frame 610 may indicate a remaining time duration of an original TXOP. After transmitting the third control frame 610, STA1 3 may perform a non-802.11 wireless communication or WLAN direct communication operation. When the NAV 606 is correctly set in STAs other than STA1 103 by the second data frame 602 and the third data frame 610, while STA1 103 is performing the non-802.11 wireless communication or WLAN direct communication operation, frame transmission by the STAs other than STA1 103 may not be performed.

STA1 103 may transmit the third data frame 608 to AP1 101 on a WLAN link after the non-802.11 wireless communication or WLAN direct communication is terminated. The third data frame 608 may be transmitted immediately after a time indicated by the second data frame 602 or in a predetermined frame space (e.g., an SIFS). In another method, after the time indicated by the second data frame 602, the STA1 103 may perform a channel access procedure (e.g., an EDCA backoff operation) to transmit the third data frame 608. When the channel access procedure is successful, STA1 103 may transmit the third data frame 608.

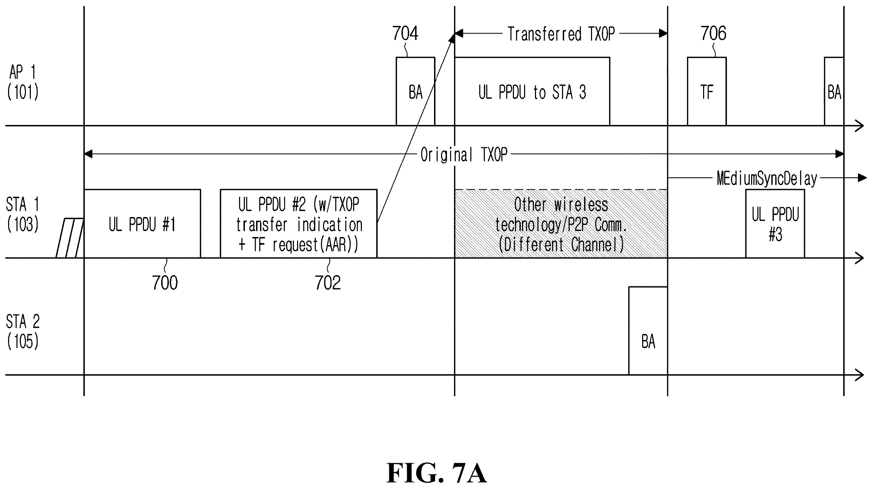

FIG. 7A illustrates a ninth embodiment of a communication method when interference occurs in a WLAN system.

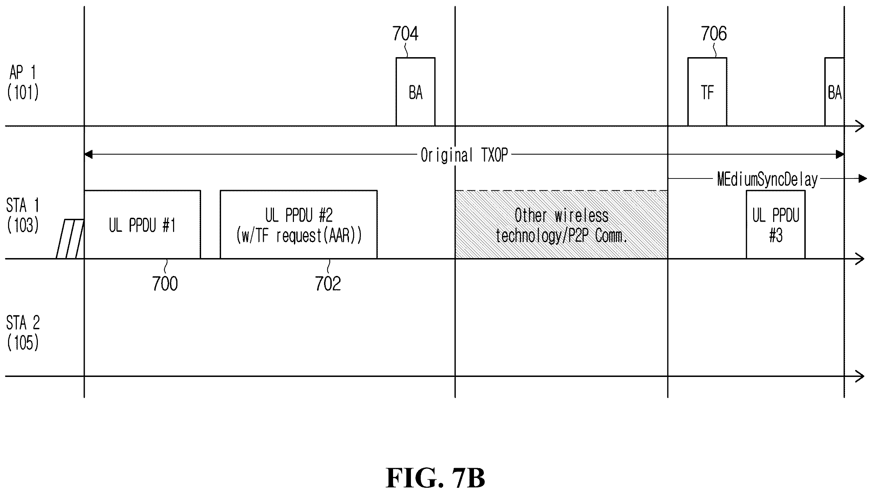

FIG. 7B illustrates a tenth embodiment of a communication method when interference occurs in a WLAN system.

Referring to FIG. 7A and 7B, AP1 101, STA1 103, and STA2 105 may operate in a WLAN channel. A WLAN channel may also be referred to as a WLAN link. A WLAN link on which AP1 101, STA1 103, and STA2 105 operate may be one link among multiple links. That is, at least one terminal among AP1 101, STA1 103, and STA2 105 may not operate in affiliation with an upper MLD. Alternatively, at least one terminal among AP1 101, STA1 103, and STA2 105 may not operate in affiliation with an upper MLD.

STA1 103 may perform a channel access procedure on a link. The channel access procedure may be a per-AC EDCA backoff operation. When STA1 103 succeeds in the backoff operation (e.g., an EDCA backoff counter according to each AC reaches 0) and a per-AC EDCAF of STA1 103 determines transmission, STA1 103 determines that a TXOP is obtained. That is, STA1 103 is a TXOP holder. STA1 103 that is a TXOP holder may obtain a TXOP as long as an original TXOP. STA1 103 may transmit a plurality of data frames at a predetermined interval within the TXOP. The predetermined interval may be an SIFS or an XIFS that is longer or shorter than the SIFS. The XIFS may be shorter than or equal to a PIFS. A data frame may be a PDDU, an MPDU, or an A-MPDU. STA1 103 may transmit a first data frame 700 and a second data frame 702 to AP1 101 on a link. A transmission interval between the first data frame 700 and the second data frame 702 may be an SIFS or an XIFS. In another method, a first control frame 704 of AP1 101 may be transmitted between the first data frame 700 and the second data frame 702. Whether the first control frame 704 is to be transmitted or the first control frame 704 is to be transmitted following the transmission of a last data frame (e.g., the second data frame 702) among data frames may be determined beforehand through negotiation, or an indicator may be included and indicated in an MAC header included in a data frame that is transmitted first (e.g., the first data frame 700).

Before the second data frame 702 is transmitted, STA1 103 may know that non-802.11 wireless communication (e.g., Bluetooth communication or cellular communication) will be performed or WLAN direct communication will be performed.

Referring to FIG. 7A, an MAC header of an MPDU or A-MPDU included in the second data frame 702 may include TXOP transfer information. The TXOP transfer information may have, for example, the same structure as illustrated in FIG. 9 or a similar structure. The TXOP transfer information may be included in an HT control field of the MAC header in the A-control form. In another method, the TXOP transfer information may be transmitted in any other form (e.g., an information element, a bit, a field, or a sub-field) than the A-control form while being included in a frame. The TXOP transfer information may indicate that STA1 103 temporarily transfers a TXOP to AP1 101. STA1 103 may mark the length of the transferred TXOP in the TXOP transfer information. STA1 103 may set the length of the duration field of the MAC header to the remaining length of an original TXOP. The TXOP transfer information further includes information that STA1 103 requests a trigger frame 706 to AP1 101. A transmission time point of the trigger frame 706 that STA1 103 requests to AP1 101 may occur after a time duration included in the TXOP transfer information indicated by STA1 103. The second data frame 702 that STA1 103 transmits as the last frame for transferring a TXOP may be transmitted in a format (e.g., non-HT PPDU) recognizable to legacy terminals.

After receiving the second data frame 702 of STA1 103, AP1 101 may respond by the first control frame 704. The first control frame 704 may include every reception state information for data frames received until the first control frame 704 is transmitted. After AP1 101 responds by the first control frame 704, AP1 101 may perform communication within a time duration included in TXOP transfer information indicated by STA1 103. The time duration indicated by STA1 103 may be referred to as a transferred TXOP. AP1 101 does not transmit a frame to STA1 103 within the transferred TXOP. AP1 101 may operate as the holder of the transferred TXOP or perform a similar operation to the TXOP holder. AP1 101 may transmit a downlink frame to STA2 105. In another method, AP1 101 may transmit the trigger frame 706 to trigger uplink frame transmission. When AP1 101 has no frame to transmit, AP1 101 may not transmit any frame within the transferred TXOP. When a NAV is correctly set in STAs other than STA1 103 by the second data frame 702, frame transmission by the STAs other than STA1 103 may not be performed within the transferred TXOP.

STA1 103 may perform a non-802.11 wireless communication or WLAN direct communication operation in a time period indicated by the second data frame 702. The non-802.11 wireless communication or WLAN direct communication operation performed by STA1 103 may be performed at a different frequency (or link) from an operating frequency at which the first data frame 700 and the second data frame 702 are transmitted. Since STA1 103 has not sense a WLAN channel for a predetermined time, STA1 103 is considered losing medium synchronization. In order to recover medium synchronization, STA1 103 sets a MediumSyncDelay timer after the non-802.11 wireless communication or WLAN direct communication operation is completed. While the MediumSyncDelay timer is operated, STA1 103 may perform a channel sensing and frame receiving operation and may not perform frame transmission. The MediumSyncDelay timer may be initialized when a correct frame (e.g., an MPDU or A-MPDU) is received and an NAV is set. The length of the MediumSyncDelay timer may be a preset value (e.g., aPPDUMaxTime that is the length of a maximum PPDU). AP1 101 may transmit the trigger frame 706 to STA1 103. Based on the trigger frame 706, STA1 103 may initialize the MediumSyncDelay timer and transmit an uplink frame. After receiving the trigger frame 706 of AP1 101, STA1 103 may transmit a third data frame to AP1 101.

Referring to FIG. 7B, STA1 103 may include information requesting the trigger frame 706 in an MAC header of an MPDU or A-MPDU included in the second data frame 702. The information requesting the trigger frame 706 includes information that STA1 103 requests the trigger frame 706 to AP1 101. The information requesting the trigger frame 706 may have, for example, the same structure as illustrated in FIG. 9 or a similar structure. In another method, the information requesting the trigger frame 706 may be included in the same format as an assisted AP request (AAR) A-control format or in a similar form. The information requesting the trigger frame 706 may be included in an HT control field of the MAC header in the A-control form. In another method, the information requesting the trigger frame 706 may be transmitted in any other form (e.g., an information element, a bit, a field, or a sub-field) than the A-control form while being included in a frame. A transmission time point of the trigger frame 706 that STA1 103 requests to AP1 101 may occur after a time duration included in the information requesting the trigger frame 706 indicated by STA1 103. A last data frame (e.g., the second data frame 702) that STA1 103 transmits to transfer a TXOP may be transmitted in a format (e.g., non-HT PPDU) recognizable to legacy terminals.

When a NAV is correctly set in STAs other than STA1 103 by the second data frame 702, frame transmission by the STAs other than STA1 103 may not be performed within the transferred TXOP.

STA1 103 may perform a non-802.11 wireless communication or WLAN direct communication operation in a time period indicated by the second data frame 702. The non-802.11 wireless communication or WLAN direct communication operation performed by STA1 103 may be performed at a different frequency (or link) from an operating frequency at which the first data frame 700 and the second data frame 702 are transmitted. Since STA1 103 has not sense a WLAN channel for a predetermined time, STA1 103 is considered losing medium synchronization. In order to recover medium synchronization, STA1 103 sets a MediumSyncDelay timer after the non-802.11 wireless communication or WLAN direct communication operation is completed. While the MediumSyncDelay timer is operated, STA1 103 may perform a channel sensing and frame receiving operation and may not perform frame transmission. The MediumSyncDelay timer may be initialized when a correct data frame (e.g., an MPDU or an A-MPDU) is received. The length of the MediumSyncDelay timer may be a preset value (e.g., aPPDUMaxTime that is the length of a maximum PPDU). AP1 101 may transmit the trigger frame 706 to STA1 103. Based on the trigger frame 706, STA1 103 may initialize the MediumSyncDelay timer and transmit an uplink frame. After receiving the trigger frame 706 of AP1 101, STA1 103 may transmit a third data frame to AP1 101.

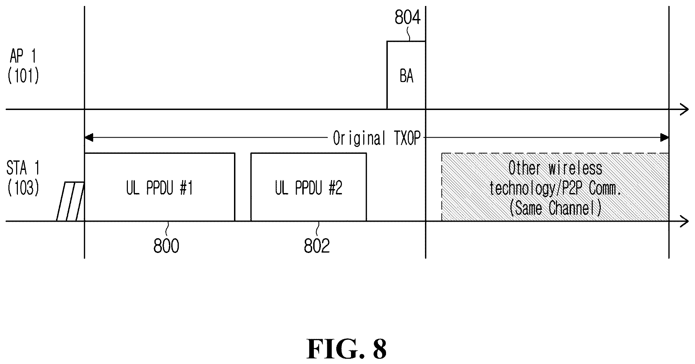

FIG. 8 illustrates an eleventh embodiment of a communication method when interference occurs in a WLAN system.

Referring to FIG. 8, AP1 101, STA1 103, and STA2 105 may operate in a WLAN channel. A WLAN channel may also be referred to as a WLAN link. A WLAN link on which AP1 101, STA1 103, and STA2 105 operate may be one link among multiple links. That is, at least one terminal among AP1 101, STA1 103, and STA2 105 may not operate in affiliation with an upper MLD. Alternatively, at least one terminal among AP1 101, STA1 103, and STA2 105 may not operate in affiliation with an upper MLD.

STA1 103 may perform a channel access procedure on a link. The channel access procedure may be a per-AC EDCA backoff operation. When STA1 103 succeeds in the backoff operation (e.g., an EDCA backoff counter according to each AC reaches 0) and a per-AC EDCAF of STA1 103 determines transmission, STA1 103 determines that a TXOP is obtained. That is, STA1 103 is a TXOP holder. STA1 103 that is a TXOP holder may obtain a TXOP as long as an original TXOP. STA1 103 may transmit a plurality of frames at a predetermined interval within the TXOP. The predetermined interval may be an SIFS or an XIFS that is longer or shorter than the SIFS. The XIFS is shorter than or equal to a PIFS. A data frame may be a PDDU, an MPDU, or an A-MPDU. STA1 103 may transmit a first data frame 800 and a second data frame 802 to AP1 101 on a link. A transmission interval between the first data frame 800 and the second data frame 802 may be an SIFS or an XIFS. In another method, a first control frame 804 of AP1 101 may be transmitted between the first data frame 800 and the second data frame 802. Whether the first control frame 804 is to be transmitted or the first control frame 804 is to be transmitted following the transmission of a last data frame (e.g., the second data frame 802) among data frames may be determined beforehand through negotiation, or an indicator may be included and indicated in an MAC header included in a data frame that is transmitted first (e.g., the first data frame 800).

Before the second data frame 802 is transmitted, STA1 103 may know that non-802.11 wireless communication (e.g., Bluetooth communication or cellular communication) will be performed or WLAN direct communication will be performed. The non-802.11 wireless communication or WLAN direct communication operation of STA1 103 may be performed in the same channel (or link) as a channel in which the first data frame 800 and the second data frame 802 are transmitted. When the non-802.11 wireless communication or WLAN direct communication operation of STA1 103 is performed in the same channel (or link) as a channel in which the first data frame 800 and the second data frame 802 are transmitted, STA1 103 is unable to perform the non-802.11 wireless communication or WLAN direct communication operation in a range exceeding an obtained original TXOP. When STA1 103 performs the communication operation in a range not exceeding the original TXOP, the fairness of other STAs than STA1 103 may be ensured.

FIG. 9 illustrates an example of A-control information.

Referring to FIG. 9, A-control information 900 may indicate at least one of TXOP transfer information, TXOP termination information, and information requesting a trigger frame, which are described in FIGS. 3 to 8. Information illustrated in FIG. 9 is the A-control information 900 included in an HT control filed included in an MAC header. Alternatively, information illustrated in FIG. 9 may be information included in a frame and may have the form of an information element, a field, or a sub-field.

The A-control information 900 may be transmitted by being included in a frame in which an HT control field of an MAC of a data frame (e.g., an MPDU or an A-MPDU) is present. The A-control information 900 may be a variant of an HT control field or an HT control field format. The HT control field may include control information of WLAN terminals. Accordingly, the A-control information 900 that is a variant of the HT control field may include the control information of the WLAN terminals.

A control ID sub-field 902 is a bit for distinguishing the A-control information 900.

A TXOP transfer sub-field 904 is a sub-field consisting of 2 bits for distinguishing a TXOP transmission operation. When the TXOP transfer sub-field 904 is set to 00, an STA or an AP receiving information does not perform any operation. When the TXOP transfer sub-field 904 is set to 01, an STA or an AP receiving information receives a TXOP. The length of the transferred TXOP may be a length indicated by an interruption duration sub-field 906 of the information illustrated in FIG. 9 or a length of a duration field included in an MAC header of a frame in which the information illustrated in FIG. 9 is transmitted. When the TXOP transfer sub-field 904 is set to 10, an STA or an AP receiving information may temporarily receive a TXOP for a time duration (e.g., a duration indicated by the interruption duration sub-field 906) included in the information. When the TXOP transfer sub-field 904 is set to 11, TXOP termination may be indicated.

The interruption duration sub-field 906 indicates how long an STA transmitting the information illustrated in FIG. 9 performs a non-802.11 communication operation or WLAN direct communication operation. The interruption duration sub-field 906 indicates a time duration and is interpreted in the same way as the duration field included in an MAC header or in a similar way.

A link ID sub-field 908 may indicate a link on which interference occurs.

A TF request sub-field 910 is a field that requests an STA or an AP receiving the information illustrated in FIG. 9 to transmit a trigger frame (e.g., 706 of FIG. 7A). When the TF request sub-field 910 has a bit of 0, the trigger frame (e.g., 706 of FIG. 7A) is not requested. When the TF request sub-field 910 has a bit of 1, the trigger frame (e.g., 706 of FIG. 7A) is requested.

In the embodiment described with reference to FIGS. 3 to 8, at least one of TXOP transfer, TXOP termination, and TF request may be indicated by using at least one piece of information among the TXOP transfer sub-field 904, the interruption duration sub-field 906, the link ID sub-field 908, and the TF request sub-field 910. The length and shape of each sub-field may be changed or modified.

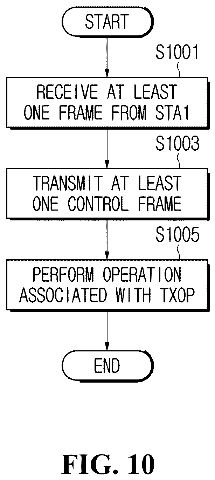

FIG. 10 illustrates an operational flowchart of an AP according to an embodiment of the present disclosure. FIG. 10 exemplifies a method of operating an AP (e.g., AP1 101 of FIG. 5A).

Referring to FIG. 10, in step S1001, the AP receives at least one data frame from a first STA (e.g., STA1 103 of FIG. 5A). The at least one data frame may be, for example, one of a PDDU, an MPDU, or an A-MPDU. At least one of the at least one data frame may include one of information related to transmission of at least one control frame (e.g., the first control frame 504 of FIG. 5A) and information related to a TXOP.

In step S1003, the AP transmits at least one control frame. For example, one control frame may be any one of a BA frame, a CF-End frame, a CTS frame, and a ACK frame. When the AP transmits a plurality of control frames, each of the control frames may be transmitted at a different time point. For example, the AP may transmit at least one control frame each time one data frame is received from the first STA. As another example, the AP may transmit at least one control frame after receiving a last data frame from the first STA prior to the non-802.11 wireless communication or WLAN direct communication of the first STA. A time point at which a control frame is transmitted may be indicated by the first STA. On the other hand, the time point at which a control frame is transmitted may be determined beforehand through negotiation between the first STA and the AP. The AP may determine the number or type of control frames to be transmitted based on TXOP-related information.

In step S1005, the AP performs an operation associated with a TXOP of the first STA. The operation associated with the TXOP of the first STA may include an operation of terminating the TXOP of the first STA or receiving the TXOP of the first STA. For example, when information associated with the TXOP includes TXOP termination information, the AP terminates the TXOP of the first STA by transmitting a control frame including CF-End. As another example, when information associated with the TXOP includes TXOP transfer information, the AP receives the TXOP from the first STA. Here, the transfer of the TXOP includes the AP's operation of obtaining the TXOP as long as a remaining time of the first STA and the first STA's operation of terminating the TXOP. The AP receiving the TXOP may operate as a temporary TXOP holder. The AP that is a temporary TXOP holder may transmit a data frame and a trigger frame to a different STA from the first STA.

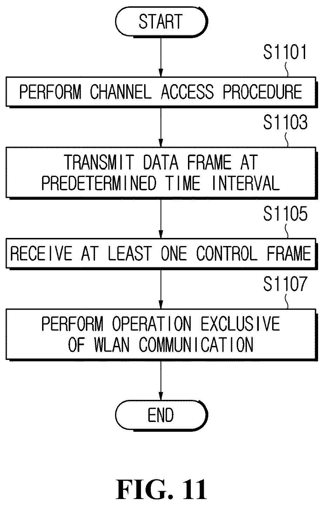

FIG. 11 illustrates an operational flowchart of a first STA according to an embodiment of the present disclosure. FIG. 11 exemplifies a method of operating a first STA (e.g., STA1 103 of FIG. 5A). The first STA according to an embodiment of the present disclosure may be an STA that performs non-802.11 wireless communication or WLAN direct communication from a time point 1. For example, the first STA may receive information on non-802.11 wireless communication or WLAN direct communication by using an input interface device.

Referring to FIG. 11, in step S1101, the first STA performs a channel access procedure. When the channel access procedure is successful, the first STA obtains a TXOP. The channel access procedure may be, for example, a per-AC EDCA backoff operation. According to an embodiment of the present disclosure, when the first STA successfully performs the backoff operation and a per-AC EDCAF of the first STA determines transmission, the first STA obtains a TXOP. The success of the backoff operation may mean, for example, that a per-AC EDCA backoff counter reaches 0. The length of a TXOP may be, for example, a time duration corresponding to an original TXOP.

In operation S1103, the first STA transmits at least one data frame at predetermined time intervals. A data frame transmitted by the first STA may be, for example, a PPDU, an MPDU, or an A-MPDU. Here, the predetermined time interval may be, for example, an SIFS. As another example, the predetermined time interval may be a time interval shorter than or equal to a PIFS. One of the at least one data frame transmitted by the first STA may include information on a TXOP. The information on the TXOP includes at least one of TXOP termination information and TXOP transfer information. The information on the TXOP may be included in an HT control field of an MAC header in the form of A-control 900. On the other hand, the information on the TXOP may be in any other form (e.g., an information element, a bit, a field, or a sub-field) than the A-control form while being included in a frame. The information on the TXOP may be information indicated by using, for example, the TXOP transfer sub-field 904 illustrated in FIG. 9. Among transmitted frames, a last frame in time (e.g., the second data frame of FIG. 5A) may be transmitted in a format (e.g., non-HT PPDU) recognizable to legacy terminals.

In step S1105, the first STA receives at least one control frame. For example, the at least one control frame may be at least one of a BA frame, a CF-End frame, a CTS frame, and a ACK frame.

In step S1107, the first STA performs an operation exclusive of WLAN communication. Here, the operation exclusive of WLAN communication may be referred to as an operation incompatible with a WLAN system or an operation that causes interference in WLAN communication. The operation exclusive of WLAN communication may be, for example, at least one of an operation of terminating a TXOP, an operation of transferring the TXOP, and an operation of performing non-802.11 wireless communication or WLAN direct communication. The operation of performing non-802.11 wireless communication or WLAN direct communication may cause interference with WLAN communication. The first STA may perform the operation exclusive of WLAN communication based on the information on the TXOP. Non-802.11 wireless communication may include, for example, Bluetooth communication. Non-802.11 wireless communication or WLAN direct communication may be performed using the same frequency as that of 802.11 wireless communication or a different frequency.

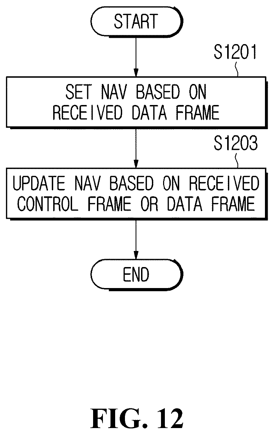

FIG. 12 illustrates an operational flowchart of a second STA according to an embodiment of the present disclosure.

Referring to FIG. 12, in step S1201, the second STA (e.g., STA2 105 of FIG. 5A) receives one of data frames transmitted by a first STA (e.g., STA1 103 of FIG. 5A). The second STA sets an NAV (e.g., the NAV 508 of FIG. 5A) based on the received data frame. For example, the second STA sets the NAV according to a value of a duration field included in the received data frame. When the NAV is set, the channel of the second STA is considered busy by virtual carrier sensing. When the channel is considered busy by virtual carrier sensing, a communication node considers the channel occupied when performing a channel sensing operation. In other words, the second STA cannot transmit a frame to an AP (e.g., AP1 101 of FIG. 5A).

In step S1203, the second STA updates the NAV based on at least one of the received control frame and the received data frame. A control frame is transmitted from the AP. A data frame is transmitted from the first STA. For example, the second STA updates the NAV according to a duration field included in at least one of the received frames. The updated NAV (e.g., the updated NAV 510 of FIG. 5A) may have a shorter time duration than the NAV before the update. On the other hand, the second STA may initialize the NAV when receiving a control frame including CF-End (e.g., the second control frame 506 of FIG. 5A).

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

In addition, the computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

While the present disclosure has been described above with reference to preferred embodiments of the present disclosure, those skilled in the art will understand that various modifications and variations may be made to the present disclosure without departing from the scope and spirit of the present disclosure, which are defined by the Claims appended hereto.

## Claims

1. A method of operating an access point (AP) in a wireless local area network (WLAN) system, the method comprising:
receiving at least one data frame from a first station (STA);
transmitting at least one control frame to at least one STA including the first STA; and
performing an operation associated with a transmit opportunity (TXOP) of the first STA,
wherein one frame of the at least one data frame includes information on the TXOP of the first STA.

2. The method of claim 1, wherein the information on the TXOP includes at least one of information indicating termination of the TXOP and information indicating transfer of the TXOP.

3. The method of claim 2, wherein the information on the TXOP includes the information indicating termination of the TXOP, and
the operation associated with the TXOP includes transmission of a contention free-end (CF-End) frame.

4. The method of claim 2, wherein the information on the TXOP includes the information indicating transfer of the TXOP, and
the performing of the operation associated with the TXOP includes:
obtaining a residual TXOP as long as a remaining time of the TXOP from the first STA; and
operating as a holder of the residual TXOP.

5. The method of claim 4, wherein the operating as the holder of the residual TXOP includes transmitting at least one of a trigger frame and a data frame to at least one STA excluding the first STA.

6. The method of claim 4, wherein the operating as the holder of the residual TXOP includes terminating the residual TXOP.

7. The method of claim 1, wherein the at least one control frame includes at least one of a block ack (BA) frame, a clear to send (CTS) frame, and a CF-End frame.

8. The method of claim 1, wherein at least one of the at least one data frame includes information on a transmission time point of the control frame.

9. The method of claim 1, wherein the information on the TXOP includes at least one of information on a period during which the first STA is unable to perform WLAN communication and information requesting a trigger frame.

10. The method of claim 1, wherein the at least one data frame is received at a predefined time interval.

11. The method of claim 10, wherein the predefined time interval is shorter than a PCF inter-frame space (PIFS).

12. A method of operating a first station (STA) in a wireless local area network (WLAN) system, the method comprising:
obtaining a transmit opportunity (TXOP);
transmitting at least one data frame to an access point (AP);
receiving at least one control frame from the AP; and
performing an operation exclusive of WLAN communication,
wherein one frame of the at least one data frame includes information on the TXOP.

13. The method of claim 12, wherein the information on the TXOP includes at least one of information indicating termination of the TXOP and information indicating transfer of the TXOP.

14. The method of claim 13, wherein the operation exclusive of the WLAN communication includes the termination of the TXOP.

15. The method of claim 13, wherein the operation exclusive of the WLAN communication includes an operation of generating interference with the WLAN communication.

16. The method of claim 12, wherein the one frame is transmitted in a format recognizable to legacy terminals.

17. The method of claim 12, wherein the at least one data frame is transmitted at a predefined time interval, and
the predefined time interval is shorter than a PCF inter-frame space (PIFS).

18. A communication node in a wireless local area network (WLAN) system, the communication node comprising:
a transceiver; and
a processor coupled to the transceiver,
wherein the transceiver receives at least one data frame from a first station (STA),
the transceiver transmits at least one control frame to at least one STA including the first STA,
the processor performs an operation associated with a transmit opportunity (TXOP) of the first STA, and
one frame of the at least one data frame includes information on the TXOP of the first STA.

19. A communication node in a wireless local area network (WLAN) system, the communication node comprising:
a transceiver; and
a processor coupled to the transceiver,
wherein the processor obtains a transmit opportunity (TXOP),
the transceiver transmits at least one data frame to an access point (AP),
the transceiver receives at least one control frame from the AP,
the processor performs an operation exclusive of WLAN communication, and
one frame of the at least one data frame includes information on the TXOP.
